# EUROPEAN PATENT SPECIFICATION

(11) **EP 3 131 704 B1**
(45) Date of publication and mention of the grant of the patent: **26.05.2021**
(21) Application number: 15728149.4
(22) Date of filing: 15.04.2015
(51) Int. Cl.: B23Q 3/06, B23Q 3/10, B25B 1/00

(54) **FIXING SYSTEM FOR VICES**
BEFESTIGUNGSSYSTEM FÜR SCHRAUBSTÖCKE
SYSTÈME DE FIXATION POUR ÉTAUX

(30) Priority: 18.04.2014 IT BG20140012
(43) Date of publication of application: 22.02.2017
(73) Proprietor: Longaretti, Guido, 24060 Costa di Mezzate (BG) (IT)
(72) Inventor: LONGARETTI, Guido, I-24060 Gorlago (BG) (IT)
(74) Representative: Gatti, Enrico
(86) International application number: PCT/IB2015/052747
(87) International publication number: WO 2015/159235

(56) References cited:
- EP-A1- 0 445 760
- EP-A1- 0 761 382
- JP-A- 2005 007 500
- US-A- 3 540 128
- US-A- 3 606 300
- US-A- 5 362 036

## Description

The present invention relates to a fixing system for vices, in particular a system of fixing pieces on vices for machine tools and for other types of machines.

Machine tools need a vice in order to grip the piece being processed.

A vice for machine tools is formed essentially of a base on which to fix a jaw fixed to a mobile trolley which travels to another jaw, mobile, opposite the fixed jaw.

The base normally comprises runners on which the mobile jaw slides.

When it is necessary to process a piece, it is placed in the vice, which is fixed to the machine, and then the tools start operating.

In the case of digitally controlled machines (CNC), it is necessary to define the origin of the axes, so that the tool may move correctly as programmed.

If it is necessary to fix another piece to the vice, the origin of the axes must be fixed again. JP2005007500 discloses a fixing system according to the preamble of claim 1.

The object of the present invention is providing a fixing system for vices which allows an origin of the axes which is fixed and independent of the piece being processed to be obtained.

Another object of the present invention is providing a fixing system for vices which provides self-centring of the piece being processed.

According to the present invention, these objects and others are achieved by a fixing system for vices according to claim 1.

Further characteristics of the invention are described in the appended claims.

This solution has various advantages with respect to the solutions of the prior art.

The fixing system for vices according to the present invention allows processing of pieces of various diameters and geometries, using a single centring of the piece and a wide possibility of fixing. It is particularly useful in repetitive work in series and where precise and speed of performance are required.

Along the axes of the piece locker holes are made for insertion of the centring plugs indispensable for correct positioning of the pieces to be processed. The diameter of the plugs and their centre-to-centre distance are different between the right side and the left side and between the front part and the rear part. Said expedient has been conceived to avoid any possibility of error in the step of fixing the piece to be processed to the piece locker.

The present invention considerably simplifies the work of both the CAD and CAM operators and also of the operator, and has considerably reduced, if not eliminated, the risks due to errors in mounting the piece.

The times of mounting the piece on the vice are also considerably reduced, as it is unnecessary to check correct positioning, which occurs automatically.

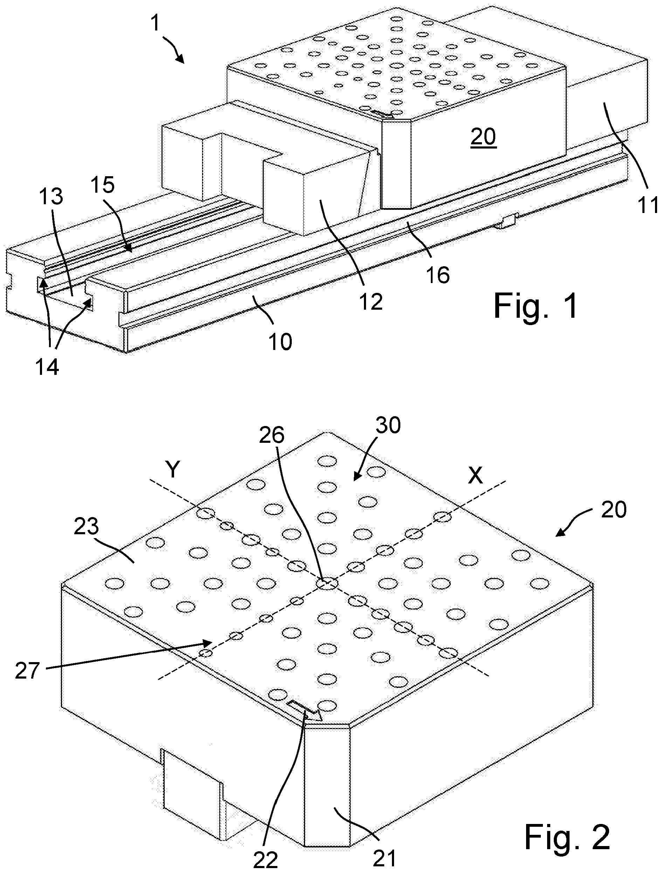

Further characteristics and advantages of the invention will become more apparent from the following description of a preferred embodiment, illustrated by way of a non-limiting example in the figures in the attached drawings, wherein
Figure 1 shows schematically, in a perspective view, a vice comprising a piece locker, according to the present invention;
Figure 2 shows a piece locker, in a perspective view, according to the present invention;

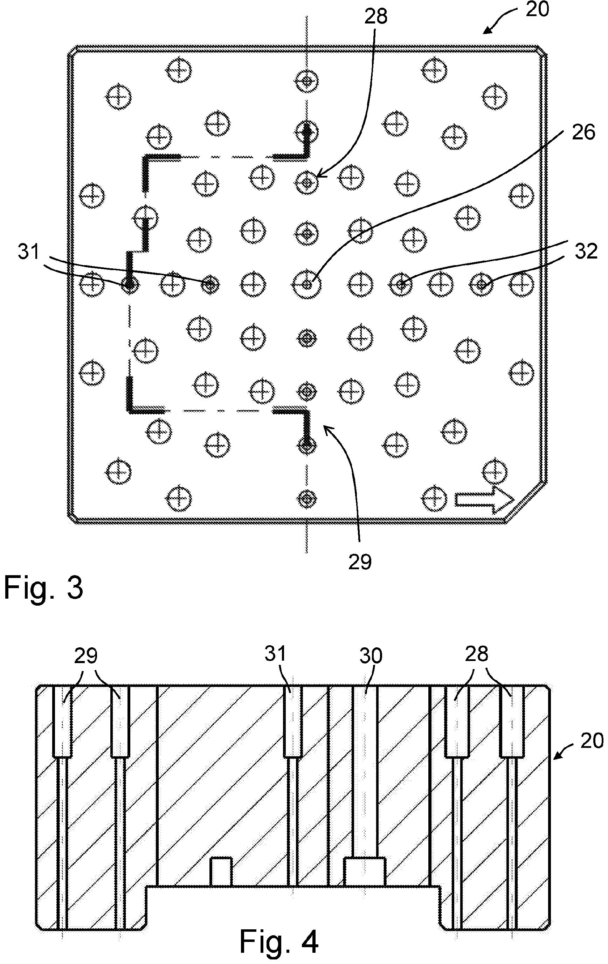

Figure 3 shows a piece locker, in a view from above, according to the present invention;
Figure 4 shows a piece locker, in a section view according to the line shown in figure 3, according to the present invention;

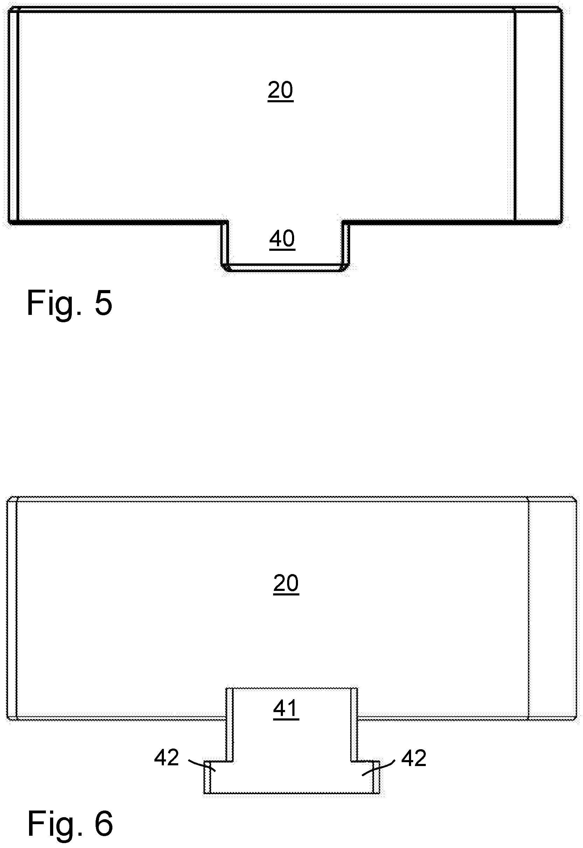

Figure 5 shows a piece locker, in a side view, according to the present invention;
Figure 6 shows a piece locker, according to a second embodiment, in a side view, according to the present invention;

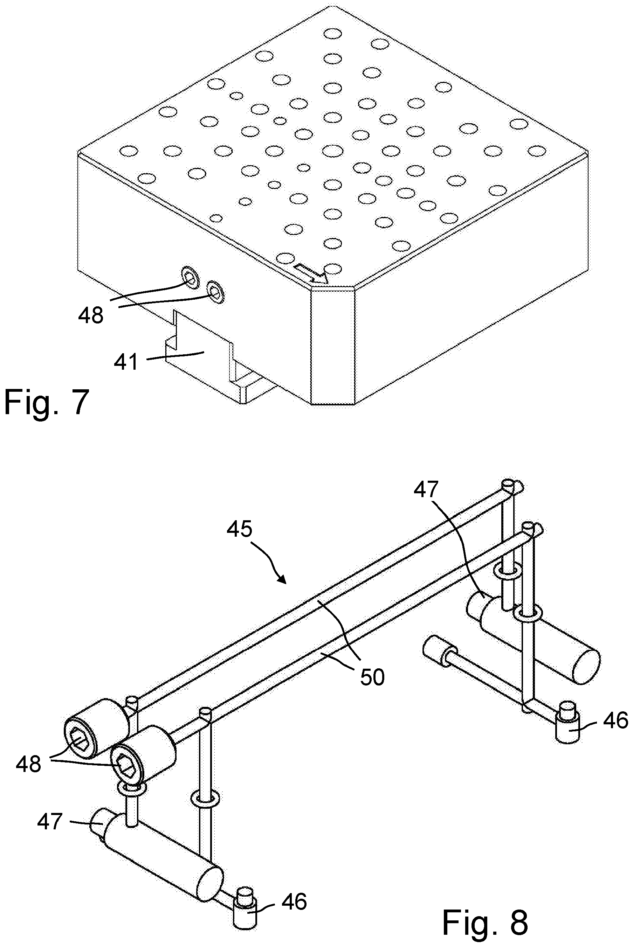

Figure 7 shows a piece locker, according to a third embodiment, in a perspective view, according to the present invention;
Figure 8 shows a detail of the centring device of a third embodiment of the piece locker, in a view from above, according to the present invention;

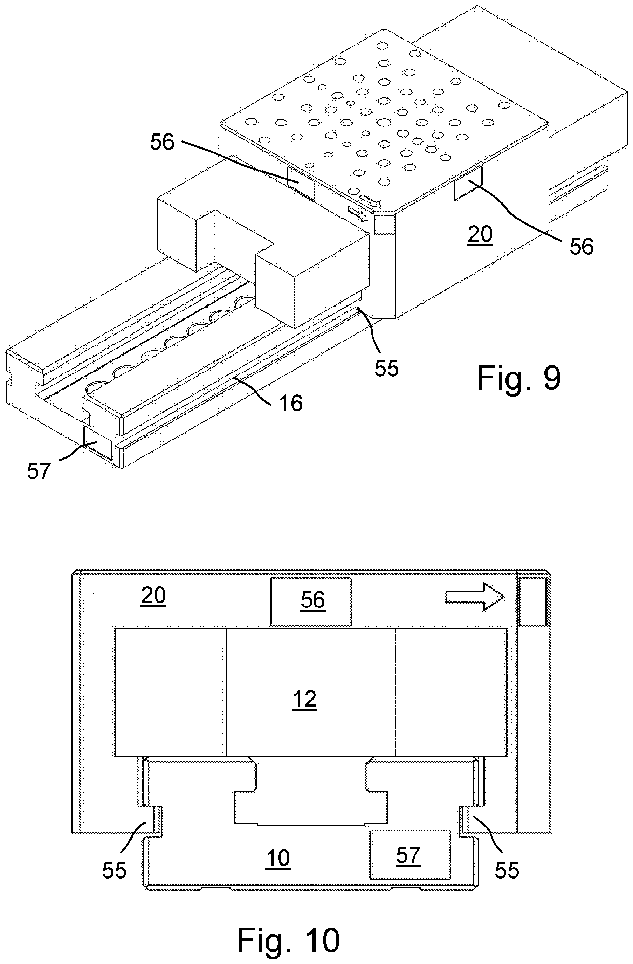

Figure 9 shows schematically, in a perspective view, a vice comprising a piece locker, according to a fourth embodiment of the present invention;
Figure 10 shows a piece locker, according to a fourth embodiment, in a side view, according to the present invention;

Referring to the appended figures, a vice 1 comprising a long base 10, on which at one end there is a fixed jaw 11 and a mobile trolley which travels to another jaw 12, which is moved opposite the fixed jaw 11.

The base 10 comprises centrally and longitudinally a recess 13 having laterally an undercut 14 for each side of the recess 13. The recess 13 and the undercuts 14 form a runner 15 for sliding of the mobile jaw 12.

On the outer surface of the base 10, two further longitudinal recesses are provided, one per part, which provide further runners 16.

Between the two jaws 11 and 12, a typically parallelepiped piece locker 20 is placed, of typical dimensions 25x25x10 cm, although other dimensions may be used, in relation to the dimensions of the pieces being processed.

The piece locker 20 has a bevelled vertical corner 21 for the entire height of the block 20 and also has an arrow 22 indicating a pre-set direction which, preferably, indicates the bevelled corner. Both elements 21 and 22 are used to indicate which is the correct mounting side of the piece locker 20 on the vice 1.

The piece locker 20 has a slightly higher height than the jaws 11 and 12, so that the upper surface 23 of the piece locker 20 is raised with respect to the jaws 11 and 12, so that the piece being processed is also raised from the vice and the tool cannot interfere with it.

On the upper surface 23 of the piece locker 20, a plurality of through holes 30 are present.

A first hole 26 central to the block 20 corresponds, in a preferred embodiment of the present invention, to the origin of the axes of the piece being processed, and has a unique and different diameter to the diameters of the other holes.

Other points or holes 26 may be used as the origin of the axes.

A first series of holes 27, of which 8 are represented in the figures, are arranged preferably aligned longitudinally to the direction of the vice 1.

Four holes 28 of these holes 27 are arranged on one side of the central hole 26 and have a first diameter and four other holes 29 of these holes 27 are arranged on the other side of the central hole 26 and have a second diameter different to the first diameter. Inside these holes 28 and 29 there is a reduction of the diameter in order to centre the pins, which will have the piece being processed, and which will be inserted in said holes.

Other arrangements of the holes 27, for example random, are possible.

The pitch (distance) between the holes 28 is different to the pitch between the holes 29.

The block 20 comprises a first axis X which passes through the holes 26 and 27 and is parallel to the longitudinal axis of the vice 1.

It further comprises a second axis Y which passes through the hole 26 and is perpendicular to the first axis X.

The plurality of holes 30 are arranged randomly, but preferably are arranged in a manner to be symmetrical both with respect to the axis X and to the axis Y.

The holes 30 are arranged in a substantially random manner, and, in any case, are substantially misaligned with each other, so that they are at different distances and positions to each other.

In particular, the holes 30 may be arranged completely randomly and therefore at different distances and positions to each other. For simplicity of construction, they are made symmetrical with respect to axes X and Y.

In particular, the holes 30 are arranged principally along radii which start from the central hole 26 and appear arranged along very wide circumferential arcs, with centres positioned on an axis perpendicular to the longitudinal axis of the vice 1.

The holes 30 are realised to allow fixing of the piece to the piece locker 20 by means of bolts, with the exception of two holes 31 positioned along the axis Y on one side of the central hole 26, intercalated by two holes 30 and by a further two holes 32 on the other side of the central hole 26, intercalated by two holes 30.

The holes 31 have a third diameter and the holes 32 have a fourth diameter different to the third diameter. Inside the holes 31 and 32 there is a reduction of the diameter, and, like holes 28 and 29, these are also adapted for insertion of pins or plugs.

The holes 30 have a diameter different to the previous four diameters.

In a piece locker 20 of dimensions of 25x25x10 cm, there are 46 holes for screws, 12 holes for pins and a central hole.

With this arrangement, the holes 30 are preferably symmetrical, to each other, both with respect to axis X and to axis Y, but are not aligned with each other and are at different pitches (distances) to each other. Holes 28, 29, 31, 32 for pins also have different diameters to each other. This is all to reduce fixing errors to a minimum.

This means there is a single way of fixing the piece once the pins and the threaded holes for the bolts have been prepared.

The piece locker 20 comprises two lower blocks 40, in the shape of a parallelepiped, arranged along axis X, which have the function of cooperating with the runner 15 of the vice. The blocks 40 have the purpose of correctly aligning the piece locker 20 to the vice 1.

In a first alternative embodiment of the piece locker 20, to increase precision of centring of the piece locker 20 to the vice 1, the blocks 41, rather than being in the shape of a parallelepiped like the blocks 40, have towards the bottom a foot 42 which cooperates with undercuts 14 of the vice 1.

In a further embodiment of the present invention, the blocks 41 comprise a mechanism 45 which increases the precision of centring of the piece locker 20 to the vice 1.

This is a mechanism 45 which pushes the piece locker 20 against the vice 1. In its simplest form, locking screws are present between the piece locker 20 and the runner 15 and/or runners 16.

In an advantageous embodiment, the mechanism 45 comprises for each block 41 a vertical small piston 46 which pushes the block 41 downwards and another horizontal small piston 47 which pushes the block 41 towards one side (the same for the two blocks 41), thus the piece locker 20 is more centred.

The small pistons 46 and 47 are moved by a hydraulic circuit 50, which passes inside the blocks 41 and in the piece locker 20, activated by screws 48 positioned outside the piece locker 20.

Tightening the screws 48 compresses the fluid inside the hydraulic circuit 50, which pushes the small pistons 46 and 47 externally.

As an alternative to the hydraulic circuit 50, it is possible to use a similar movement mechanism of the pistons 46 and 47 of mechanical type, for example by means of worm screws and gears, electromechanical or magnetic.

The mechanism 45 and, in particular, the hydraulic circuit 50 is preferably realised inside the blocks 41, but could also be realised outside the piece locker 20 and arranged inside the vice 1.

In a further embodiment of the present invention, the piece locker 20 has, to align it correctly with the vice 1, in substitution of the two blocks 40 or 41, runners 55 adapted to cooperate with the outer runners 16 at the base 10 of the vice 1.

Other systems of alignment runners of the piece locker 20 to the vice 1 are possible.

Housings 56 positioned on the piece locker 20 and housings 57 on the vice 1, for example on the base 10, are provided, in order to insert a bar code or a QR code, or in any case another code to identify unequivocally the piece locker 20 and the vice 1, so that the machine tool directly or the operator of the machine tool can be certain to couple the piece (and the vice) correctly to the machine tool in correct processing.

Functioning of the piece locker 20 appears evident for a person skilled in the art from what is described and, in particular, is as follows.

For the processing of a piece, which normally starts with a full block of metal, at least two pins are created, on said piece, of different dimensions, in order to be inserted in the holes 28 and 29, then two or more threaded fixing holes are prepared, choosing between two or more holes 30 on the piece locker 20. The pins are inserted in the holes 28 and 29, and by means of screws, inserted in the holes chosen, from the surface underneath the block 20, are screwed into the threaded holes prepared in the piece to be processed.

Once the piece to be processed is fixed on the block 20, this is fixed onto the vice 1. The runners 15 align the block 20 with the vice and the jaws 11 and 12 block it in the pre-set position.

If the mechanism 45 is present, the screws 48 are tightened before blocking the jaw 12.

By means of the elements 21 and 22 on the block 20 and by means of the holes 28, 29, 31 and 32 having different diameters and positioned at different distances to each other, and also the choice of a certain number of holes 30 on the block 20, the possibility of incorrect fixing of the piece on the vice 1 is eliminated.

The holes 28, 29, 31 and 32 having different diameters and positioned at different distances to each other provide a single positioning of the piece which eliminates any mounting error.

Furthermore, the random arrangement of the holes 30 eliminates the possibility of mounting errors of the piece to be processed on the block 20. In particular, after choosing several fixing holes 30 and several holes 28, 29, 31, 32 for the pins on the piece to be processed, only one mounting position of the piece on the block 20 exists.

The machine tool programmer knows beforehand the origin of the axes, it having defined beforehand, for example, that it is the central hole 26, and has therefore programmed the CNC machine beforehand, starting from said origin of the axis, and the machine operator therefore only needs to start it.

In the case of a change of a piece, or processing on the opposite part of the piece already processed, fixing of the piece to the block 20 is repeated, preparing on the piece the pins and threaded holes, but it is no longer necessary to zero the machine, since the origin of the axes is still hole 26.

The piece locker 20 is preferably made of aluminium, but other materials are usable. The dimensions may also be any, depending on requirements and the prior art.

## Claims

1. A fixing system for vices (1) comprising: a base (10); said base (10) having a first runner (15, 16); a fixed jaw (11) fixed to an end of said base (10); a mobile jaw (12) sliding along said runner (15, 16); a piece locker (20) to be fixed between said fixed jaw (11) and said mobile jaw (12); said piece locker (20) comprising a plurality of holes (28, 29, 30, 31, 32) to fix a piece to be processed onto it; **characterised by** said plurality of holes (28.
29, 30, 31, 32) being arranged in a substantially random manner; said plurality of holes (28, 29, 31, 32) comprising at least two holes (28, 29, 31, 32) having a first diameter and at least two holes (28, 29, 31, 32) having a second diameter different to said first diameter; and by the piece locker (20) comprising two lower blocks (40, 41), which have the function of cooperating with the runner (15) of the vice (1).

2. The fixing system according to claim 1, **characterised by** said plurality of holes (28, 29, 30, 31, 32) being substantially misaligned with each other.

3. The fixing system according to one of the previous claims, **characterised by** said plurality of holes (28, 29, 30, 31, 32) comprising at least two holes (30) having a third diameter different to said first and second diameter.

4. The fixing system according to one of the previous claims, **characterised by** said piece locker (20) comprising a hole (26) which represents the origin of the axes for programming movement of the tool.

5. The fixing system according to one of the previous claims, **characterised by** said piece locker (20) comprising a plurality of holes (28, 29, 31, 32) adapted to cooperate with pins arranged on the piece to be processed.

6. The fixing system according to the previous claim, **characterised by** said plurality of holes (28, 29, 31, 32) adapted to cooperate with pins comprising inside them a reduction of diameter for centring the pins.

7. The fixing system according to one of the previous claims, **characterised by** said piece locker (20) comprising a plurality of through holes (30) for fixing the piece to be processed to said piece locker (20).

8. The fixing system according to one of the previous claims, **characterised by** said plurality of holes (30) being arranged symmetrical to a first axis (X) parallel to the longitudinal axis of said vice and to a second axis (Y) perpendicular to said first axis; said first axis and said second axis passing through the centre of said piece locker (20).

9. The fixing system according to one of the previous claims, **characterised by** said plurality of holes (28, 29, 31, 32) adapted to cooperate with pins comprising holes (28, 29) arranged along a first axis (X) and comprising holes (31, 32) arranged along a second axis (Y) perpendicular to said first axis (X).

10. The fixing system according to one of the previous claims, **characterised by** said plurality of holes (28, 29, 31, 32) adapted to cooperate with pins being arranged at different distances to each other.

11. The fixing system according to one of the previous claims, **characterised by** said piece locker (20) comprising means (21, 22) to indicate a pre-set direction.

12. The fixing system according to one of the previous claims, **characterised by** said piece locker (20) comprising thrusting means (45) able to provide a thrust force between said piece locker (20) and said vice (1).

13. The fixing system according to one of the previous claims, **characterised by** said piece locker (20) and said vice (1) comprising housings (56, 57) to be able to insert an identification of said piece locker (20) and said vice (1).

## Patentansprüche

1. Ein Befestigungssystem für Schraubstöcke (1), das Folgendes umfasst: eine Basis (10), wobei die genannte Basis (10) eine erste Gleitschiene (15, 16) aufweist; eine feststehende Klemmbacke (11), welche an einem Ende der genannten Basis (10) befestigt ist; eine bewegliche Klemmbacke (12), die an der genannten Gleitschiene (15, 16) entlang gleitet; eine Werkstück-Feststellvorrichtung (20), welche zwischen der genannten feststehenden Klemmbacke (11) und der genannten beweglichen Klemmbacke (12) befestigt wird; wobei die genannte Werkstück-Feststellvorrichtung (20) jeweils eine Vielzahl von Öffnungen (28, 29, 30, 31, 32) aufweist, um ein Werkstück, das bearbeitet werden soll, daran befestigen zu können; **dadurch gekennzeichnet, dass** die genannte Vielzahl von Öffnungen (28, 29, 30, 31, 32) jeweils in einer im wesentlichen zufälligen Weise angeordnet ist, wobei die genannte Vielzahl von Öffnungen (28, 29, 31, 32) jeweils mindestens zwei Öffnungen (28, 29, 31, 32) mit einem ersten Durchmesser und mindestens zwei Öffnungen (28, 29, 31, 32) mit einem von dem ersten Durchmesser abweichenden zweiten Durchmesser umfasst; sowie dadurch, dass die Werkstück-Feststellvorrichtung (20) zwei untere Blöcke (40, 41) umfasst, welche den Zweck haben, jeweils mit der Gleitschiene (15) des Schraubstocks (1) zu kooperieren.

2. Das Befestigungssystem gemäß Anspruch 1, **dadurch gekennzeichnet, dass** die genannte Vielzahl von Öffnungen (28, 29, 30, 31, 32) im Wesentlichen jeweils versetzt zueinander ausgerichtet sind.

3. Das Befestigungssystem gemäß einem beliebigen der vorausgegangenen Ansprüche, **dadurch gekennzeichnet, dass** die genannte Vielzahl von Öffnungen (28, 29, 30, 31, 32) mindestens zwei Öffnungen (30) aufweist, die einen dritten Durchmesser haben, der von den genannten ersten und zweiten Durchmessern abweicht.

4. Das Befestigungssystem gemäß einem der vorausgegangenen Ansprüche, **dadurch gekennzeichnet, dass** die genannte Werkstück-Feststellvorrichtung (20) jeweils eine entsprechende Öffnung (26) umfasst, die den Ursprung der Achsen zur Programmierung der Werkzeugbewegung darstellt.

5. Das Befestigungssystem gemäß einem der vorausgegangenen Ansprüche, **dadurch gekennzeichnet, dass** die Werkstück-Feststellvorrichtung (20) eine Vielzahl von Öffnungen (28, 29, 31, 32) umfasst, welche geeignet sind, jeweils mit entsprechenden Zapfen zu kooperieren, die sich an dem zu bearbeitenden Werkstück befinden.

6. Das Befestigungssystem gemäß dem vorausgegangenen Anspruch, **dadurch gekennzeichnet, dass** die genannte Vielzahl von Öffnungen (28, 29, 31, 32) geeignet ist, jeweils mit entsprechenden Zapfen zu kooperieren, welche in ihrem Inneren eine Durchmesserreduktion zur Zentrierung der Zapfen enthalten.

7. Das Befestigungssystem gemäß einem der vorausgegangenen Ansprüche, **dadurch gekennzeichnet, dass** die genannte Werkstück-Feststellvorrichtung (20) eine Vielzahl durchgehender Öffnungen (30) zur Befestigung des zu bearbeitenden Werkstücks an der genannten Werkstück-Feststellvorrichtung (20) umfasst.

8. Das Befestigungssystem gemäß einem der vorausgegangenen Ansprüche, **dadurch gekennzeichnet, dass** die genannte Vielzahl von Öffnungen (30) jeweils symmetrisch zu einer ersten Achse (X) angeordnet ist, welche sich parallel zu der Längsachse des genannten Schraubstocks und zu einer zweiten Achse (Y) verhält, die lotrecht zu der genannten ersten Achse ist; wobei die genannte erste Achse und die genannte zweite Achse jeweils durch die Mitte der genannten Werkstück-Feststellvorrichtung (20) hindurchführen.

9. Das Befestigungssystem gemäß einem der vorausgegangenen Ansprüche, **dadurch gekennzeichnet, dass** die genannte Vielzahl von Öffnungen (28, 29, 31, 32) geeignet ist, mit entsprechenden Zapfen zu kooperieren, welche Öffnungen (28, 29) umfassen, welche entlang einer ersten Achse (X) angeordnet sind, und Öffnungen (31, 32), die entlang einer zweiten Achse (Y) angeordnet sind, welche sich lotrecht zu der genannten ersten Achse (X) verhält.

10. Das Befestigungssystem gemäß einem der vorausgegangenen Ansprüche, **dadurch gekennzeichnet, dass** die genannte Vielzahl von Öffnungen (28, 29, 31, 32) geeignet ist, mit entsprechenden Zapfen zu kooperieren, die jeweils in unterschiedlichen Abständen zueinander angeordnet sind.

11. Das Befestigungssystem gemäß einem der vorausgegangenen Ansprüche, **dadurch gekennzeichnet, dass** die genannte Werkstück-Feststellvorrichtung (20) Elemente umfasst (21, 22), um eine vorbestimmte Richtung anzugeben.

12. Das Befestigungssystem gemäß einem der vorausgegangenen Ansprüche, **dadurch gekennzeichnet, dass** die genannte Werkstück-Feststellvorrichtung (20) entsprechende Schubelemente (45) umfasst, um eine Schubkraft zwischen der genannten Werkstück-Feststellvorrichtung (20) und dem genannten Schraubstock (1) zu liefern.

13. Das Befestigungssystem gemäß einem der vorausgegangenen Ansprüche, **dadurch gekennzeichnet, dass** die genannte Werkstück-Feststellvorrichtung (20) und der genannte Schraubstock (1) jeweils Gehäuse (56, 57) umfassen, um eine Identifikation der genannten Werkstück-Feststellvorrichtung (20) und des genannten Schraubstocks (1) einsetzen zu können.

## Revendications

1. Système de fixation pour étaux (1) comprenant : une base (10) ; ladite base (10) ayant une première glissière (15, 16); une mâchoire fixe (11) fixée à une extrémité de ladite base (10); une mâchoire mobile (12) coulissant le long de ladite glissière (15, 16); un élément de blocage de pièce (20) pour être fixé entre ladite mâchoire fixe (11) et ladite mâchoire mobile (12); ledit élément de blocage de pièce (20) comprenant une pluralité de trous (28, 29, 30, 31, 32) pour fixer une pièce à traiter sur celui-ci; **caractérisé par** ladite pluralité de trous (28, 29, 30, 31, 32) étant disposés de manière essentiellement aléatoire; ladite pluralité de trous (28, 29, 31, 32) comprenant au moins deux trous (28, 29, 31, 32) ayant un premier diamètre et au moins deux trous (28, 29, 31, 32) ayant un deuxième diamètre différent dudit premier diamètre, et par un élément de blocage de pièce (20) comprenant deux blocs inférieurs (40, 41), qui ont la fonction de coopérer avec la glissière (15) de l'étau (1).

2. Système de fixation selon la revendication 1, **caractérisé par** ladite pluralité de trous (28, 29, 30, 31, 32) étant essentiellement désalignés les uns avec les autres.

3. Système de fixation selon l'une des revendications précédentes, **caractérisé par** ladite pluralité de trous (28, 29, 30, 31, 32) comprenant au moins deux trous (30) ayant un troisième diamètre différent desdits premier et second diamètres.

4. Système de fixation selon l'une des revendications précédentes, **caractérisé par** ledit élément de blocage de pièce (20) comprenant un trou (26) qui représente l'origine des axes pour le mouvement de programmation de l'outil.

5. Système de fixation selon l'une des revendications précédentes, **caractérisé par** ledit élément de blocage de pièce (20) comprenant une pluralité de trous (28, 29, 31, 32) adaptés pour coopérer avec des broches disposées sur la pièce à traiter.

6. Système de fixation selon la revendication précédente, **caractérisé par** ladite pluralité de trous (28, 29, 31, 32) adaptés pour coopérer avec des broches comprenant à l'intérieur une réduction de diamètre pour centrer les broches.

7. Système de fixation selon l'une des revendications précédentes, **caractérisé par** ledit élément de blocage de pièce (20) comprenant une pluralité de trous traversants (30) pour fixer la pièce à traiter audit élément de blocage de pièce (20).

8. Système de fixation selon l'une des revendications précédentes, **caractérisé par** ladite pluralité de trous (30) étant disposés symétriques à un premier axe (X) parallèle à l'axe longitudinal dudit étau et à un second axe (Y) perpendiculaire audit premier axe ; ledit premier axe et ledit second axe passant par le centre dudit élément de blocage de pièce (20).

9. Système de fixation selon l'une des revendications précédentes, **caractérisé par** ladite pluralité de trous (28, 29, 31, 32) adaptés pour coopérer avec des broches comprenant des trous (28, 29) disposés le long d'un premier axe (X) et comprenant des trous (31, 32) disposés le long d'un second axe (Y) perpendiculaire audit premier axe (X).

10. Système de fixation selon l'une des revendications précédentes, **caractérisé par** ladite pluralité de trous (28, 29, 31, 32) adaptés pour coopérer avec des broches étant disposées à des distances différentes les unes des autres.

11. Système de fixation selon l'une des revendications précédentes, **caractérisé par** ledit élément de blocage de pièce (20) comprenant des moyens (21, 22) pour indiquer une direction prédéfinie.

12. Système de fixation selon l'une des revendications précédentes, **caractérisé par** ledit élément de blocage de pièce (20) comprenant des moyens de poussée (45) aptes à fournir une force de poussée entre ledit élément de blocage de pièce (20) et ledit étau (1).

13. Système de fixation selon l'une des revendications précédentes, **caractérisé par** ledit élément de blocage de pièce (20) et ledit étau (1) comprenant des logements (56, 57) destinés à insérer une identification dudit élément de blocage de pièce (20) et dudit étau (1).
